# EUROPEAN PATENT APPLICATION

(11) **EP 4 589 672 A1**
(43) Date of publication of application: **23.07.2025**
(21) Application number: 24863136.8
(22) Date of filing: 02.09.2024
(51) Int. Cl.: H01M 4/04

(54) **ELECTRODE MANUFACTURING DEVICE AND ELECTRODE MANUFACTURING METHOD**

(30) Priority: 04.09.2023 KR 20230116626
(71) Applicant: LG Energy Solution, Ltd., Seoul 07335 (KR)
(72) Inventor: HAN, Geum Jae, Daejeon 34122 (KR); AN, In Gu, Daejeon 34122 (KR); KWON, O Jong, Daejeon 34122 (KR); KIM, Kwang Jin, Daejeon 34122 (KR); LEE, Da Young, Daejeon 34122 (KR); KO, Nam Gyu, Daejeon 34122 (KR)
(74) Representative: Plasseraud IP
(86) International application number: PCT/KR2024/013103
(87) International publication number: WO 2025/053555

(57) **Abstract**

An electrode manufacturing device according to one embodiment of the present disclosure includes a box-shaped cast having an interior space for accommodating an electrode slurry and a current collector; an electrode slurry injection inlet for injecting the electrode slurry into the interior space; and a current collector insertion inlet for inserting the current collector into the interior space; and a heat source configured to heat the cast, in order to dry the electrode slurry filled in the interior of the cast, wherein the current collector insertion inlet is located at a center of a first surface of the cast in which the current collector insertion inlet is formed, in order to stack the electrode slurry on both sides of the current collector, wherein the cast is configured to compress the electrode slurry in the direction of the current collector, in order to roll the electrode slurry stacked on both sides of the current collector.

## Description

### [Technical Field]

This application claims the benefit of priority from Korean Patent Application No. 10-2023-0116626, filed on September 04, 2023, the disclosures of which are incorporated herein by reference.

The present disclosure relates to a manufacturing device and a manufacturing method of an electrode for lithium secondary battery, and more specifically to a manufacturing device and a manufacturing method of an ultra-high loading electrode.

### [Background]

As technology development and demand for mobile devices increases, the demand in secondary batteries as an energy source is rapidly increasing, and recently, the use of secondary batteries as a power source for electric vehicles (EVs) and hybrid electric vehicles (HEVs) has been realized, and among such secondary batteries, lithium secondary batteries with high energy density, high discharge voltage, and output stability are in high demand.

In particular, lithium secondary batteries used as power sources for electric vehicles (EVs) and hybrid electric vehicles (HEVs) require characteristics capable of delivering high output in a short time along with high energy density.

Generally, a lithium secondary battery is manufactured by using materials capable of insertion and dissociation of lithium ions as a negative electrode and a positive electrode, and charging an organic electrolyte or a polymer electrolyte between the positive electrode and the negative electrode, and electrical energy is generated by oxidation-reduction reactions when lithium ions are inserted and dissociated at the positive electrode and the negative electrode.

**In** this case, the negative electrode and the positive electrode include an electrode active material layer on the current collector of each electrode, and such electrodes can be manufactured by mixing and stirring the electrode active material with a binder, a solvent, a conductive material as needed, and a dispersant to prepare an electrode slurry, and then applying the electrode slurry on the current collector using a slot die coater, drying and rolling the electrode slurry.

Recently, with the increasing demand for secondary batteries having high energy density, the demand for high loading, ultra-high loading electrodes with more loading of electrode slurry on the current collector is increasing.

However, the conventional electrode manufacturing method as described above has a problem that as the loading amount (thickness) of the electrode slurry increases, in the coating process, the electrode slurry discharged from the slot die coater becomes larger than the dimensions of the target electrode due to the high flowability, and a collapse phenomenon occurs in which the loading amount becomes smaller at the edge of the electrode slurry coated part based on the width direction compared to the center of the electrode slurry coated part. In addition, in the conventional electrode manufacturing method, as the loading amount (thickness) of the electrode slurry increases, the crack generation caused by the difference in drying speed near the boundary of the electrode slurry coated part and the uncoated part to which the electrode slurry is not applied may be intensified in the drying process of the electrode slurry.

Therefore, in manufacturing high loading or ultra-high loading electrodes, it is necessary to develop a novel technology to solve the problems caused by the conventional electrode manufacturing method.

### [Summary]

### [Technical Problem]

The object of the present disclosure is to provide a novel electrode manufacturing device and method for solving the problems of conventional electrode manufacturing methods in manufacturing high loading electrodes or ultra-high loading electrodes, despite an increase in loading amount.

### [Technical Solution]

According to one embodiment of the present disclosure, an electrode manufacturing device is provided. The electrode manufacturing device including: a box-shaped cast having an interior space for accommodating an electrode slurry and a current collector; an electrode slurry injection inlet for injecting the electrode slurry into the interior space; and a current collector insertion inlet for inserting the current collector into the interior space; and a heat source configured to heat the cast, in order to dry the electrode slurry filled in the interior of the cast, and the current collector insertion inlet may be located at a center of a first surface of the cast in which the current collector insertion inlet is formed, in order to stack the electrode slurry on both sides of the current collector, and the cast may be configured to compress the electrode slurry in a direction of the current collector, in order to roll the electrode slurry stacked on both sides of the current collector.

In one embodiment, the cast may further comprise: a first vent hole for discharging gas generated by vaporization of a solvent of an electrode slurry stacked on one side of the current collector to an outside of the cast; and a second vent hole for discharging gas generated by vaporization of a solvent of an electrode slurry stacked on the other side of the current collector to the outside of the cast.

In one embodiment, the cast may be configured to independently adjust a length in a horizontal direction, a length in a vertical direction, and a length in a thickness direction of the interior space, respectively.

In one embodiment, the cast may be configured to fix the current collector.

In one embodiment, the cast may be configured to fix the current collector in an upright state.

In one embodiment, the interior space of the cast may be divided into a first interior space and a second interior space by the inserting of the current collector.

In one embodiment, the electrode manufacturing device may further comprise a driving part for moving a first pressing surface and a second pressing surface of the cast for compressing the electrode slurry stacked on both sides of the current collector, in the direction of compression.

In one embodiment, the heat source may be embedded in the cast.

In one embodiment, the heat source may be embedded in a first pressing surface of the cast and a second pressing surface of the cast for rolling the electrode slurry stacked on both sides of the current collector.

In one embodiment, the electrode slurry injection inlet may include a first electrode slurry injection inlet for injecting electrode slurry to be stacked on one side of the current collector and a second electrode slurry injection inlet for injecting electrode slurry to be stacked on the other side of the current collector.

According to another embodiment of the present disclosure, an electrode manufacturing method is provided. The electrode manufacturing method may manufacture an electrode using the electrode manufacturing device described above.

In one embodiment, the electrode manufacturing method may include: inserting a current collector into the current collector insertion inlet; injecting an electrode slurry through the electrode slurry injection inlet such that the electrode slurry is stacked on both sides of the current collector; increasing a temperature of the heat source to dry the electrode slurry; and rolling the electrode slurry simultaneously with initiation of increasing the temperature of the heat source or in a middle of the increasing the temperature of the heat source.

The electrode manufacturing method according to one embodiment may further comprise, prior to inserting the current collector, adjusting a volume of the interior space of the cast so that the volume of the interior space of the cast is appropriate for dimensions of the electrode to be manufactured.

In one embodiment, in injecting the electrode slurry, the electrode slurry may be injected in an amount such that the loading amount of electrode slurry to be stacked on an one side of the current collector is 600 mg/25 cm² or more.

In one embodiment, increasing the temperature of the heat source may be initiated in a state in which the interior space is completely filled by the electrode slurry.

### [Advantageous Effects]

According to one embodiment of the present disclosure, since an electrode slurry can be injected into a cast having a predetermined dimensions of a sealed interior space, and the electrode slurry can be dried and compressed in a state in which the interior space is completely filled by the electrode slurry, there is no possibility of sliding due to the flowability of the electrode slurry, and thus electrodes of desired dimensions can be manufactured.

According to one embodiment of the present disclosure, as the electrode slurry can be compressed simultaneously with the drying of the electrode slurry, cracks that may be caused by deviations in drying do not occur even when the loading amount of the electrode slurry is increased, enabling the manufacture of ultra-high loading electrodes.

According to one embodiment of the present disclosure, by compressing the electrode slurry simultaneously with the drying of the electrode slurry, the boiling point of the solvent in the electrode slurry can be lowered, and thus the drying temperature can be set lower compared to a conventional electrode manufacturing equipment, thereby providing an effect of preventing physical property change of the electrode due to high drying temperature.

### [Brief Description of the Drawings]

FIG. 1 is a front view of an electrode manufacturing device according to exemplary embodiments.
FIG. 2 is a cross-sectional view of an electrode manufacturing device according to exemplary embodiments.
FIG. 3 is a top view of an electrode manufacturing device according to exemplary embodiments.
FIG. 4 is a diagram illustrating a view after electrode slurry is injected into an interior space of a cast.
FIG. 5 is a flowchart to describe an electrode manufacturing method according to an exemplary embodiment of the present disclosure.
FIG. 6 is a flowchart to describe an electrode manufacturing method according to an exemplary embodiment of the present disclosure.

### [Description of Reference Numerals]

100: electrode manufacturing device
110: cast
111a: first interior space, 111b: second interior space
112a, 112b: electrode slurry injection inlet
113: current collector insertion inlet
114a: first vent hole, 114b: second vent hole
115: first surface
116: first pressing surface
117: second pressing surface
120: heat source
130: driving part
140: temperature control part
150: control part
11: current collector
12: electrode slurry

### [Detailed Description]

Hereinafter, the present disclosure will be described in detail with reference to the attached drawings. Prior to this, terms and words used in the present specification and claims should not be construed as limited to general or dictionary terms and should be interpreted with the meaning and concept in accordance with the technical idea of the present disclosure based on the principle that the inventors have appropriately defined the concepts of terms in order to explain the invention in the best way.

Accordingly, it is to be understood that the embodiments described herein, and the configurations illustrated in the drawings are only the most preferred embodiments of the present disclosure and are not intended to be representative of all of the technical ideas of the present disclosure, and that there may be various equivalents and modifications that may be substituted for them at the time of filing.

In addition, in describing the present disclosure, specific descriptions of related disclosed configurations or functions are omitted where it is considered that such detailed descriptions would obscure the subject matter of the present disclosure.

The present disclosure is shown in embodiment to more fully explain the present disclosure to those of ordinary skill in the art, and therefore, the shapes and sizes of the components in the drawings may be exaggerated, omitted, or shown schematically for clarity. Accordingly, the size or proportions of each component are not necessarily indicative of its actual size or proportions.

As used herein, the concept of stacking electrode slurry includes filling remaining space of the interior space of the cast, excluding the current collector, with electrode slurry to form a layer of electrode slurry on the current collector.

### (first embodiment)

The present disclosure provides an electrode manufacturing device as a first embodiment.

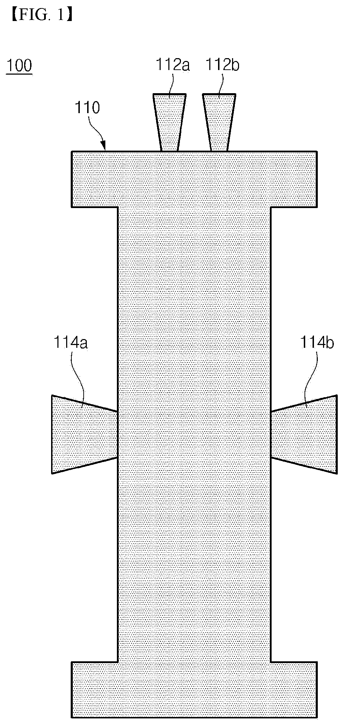

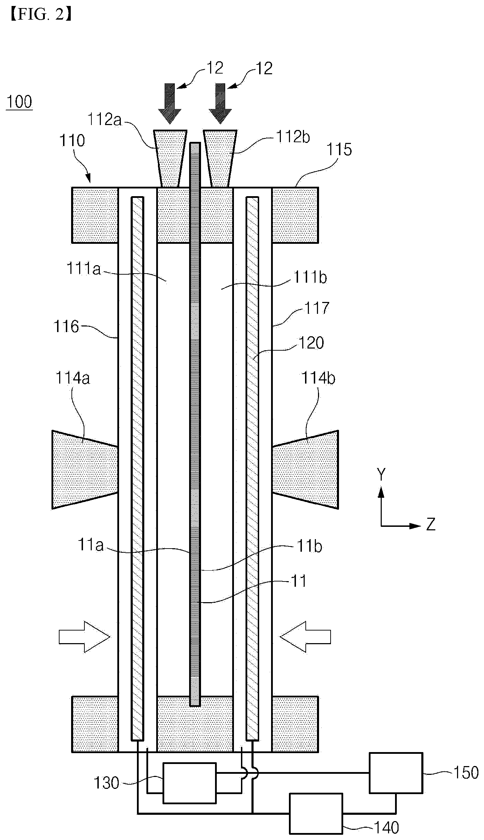

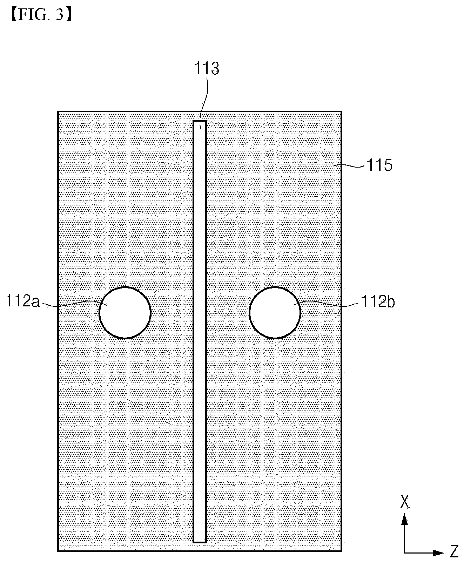

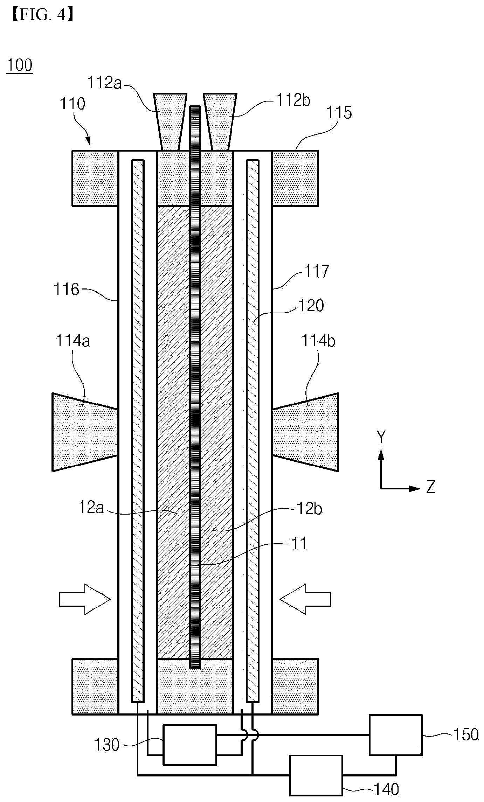

FIG. 1 is a front view of an electrode manufacturing device according to exemplary embodiments, FIG. 2 is a cross-sectional view of an electrode manufacturing device according to exemplary embodiments, FIG. 3 is a top view of an electrode manufacturing device according to exemplary embodiments, and FIG. 4 is a diagram illustrating a view after electrode slurry is injected into an interior space of a cast.

Referring to these figures, an electrode manufacturing device 100 according to exemplary embodiments may include a box-shaped cast 110 having interior spaces 111a,111b; and a heat source 120. The electrode manufacturing device 100 according to exemplary embodiments may be configured to continuously compress the electrode slurry 12 being dried in the direction of the current collector 11 with the current collector 11 and the electrode slurry 12 inserted within the interior spaces 111a,111b of the cast.

The electrode manufacturing device 100 according to an embodiment of the present disclosure is configured such that the drying and rolling processes can be performed simultaneously in a state in which the electrode slurry 12 is sufficiently filled in the interior spaces 111a,111b having a predetermined volume. When the electrode is manufactured with such an electrode manufacturing device 100, there is no possibility of sliding due to the flowability of the electrode slurry, and the electrode can be manufactured according to the dimensions of the target electrode. Moreover, since the coating thickness of the electrode slurry is uniform, and since the drying process and the rolling process can be performed simultaneously, there is no risk of cracking, thereby electrodes can be manufactured with dramatically increased loading amount of electrode slurry. In addition, as the boiling point of the solvent is lowered as the electrode slurry being dried is continuously pressurized, the electrode can be dried at a lower drying temperature compared to a conventional electrode drying method, thus preventing physical property changes of the electrode due to high drying temperature.

In one embodiment, the cast 110 may comprise interior spaces 111a,111b for accommodating the electrode slurry 12 and the current collector 11; electrode slurry injection inlets 112a,112b for injecting the electrode slurry 12 into the interior spaces 111a,111b; and a current collector insertion inlet 113 for inserting the current collector 11 into the interior spaces 111a,111b.

The cast 110 may be configured to enable sealing, for drying and compression of the electrode slurry filled in the interior, and the material of the cast is not particularly limited, but is preferably a metallic material with excellent thermal conductivity for drying of the electrode slurry.

The interior spaces 111a,111b may have a cuboid shape corresponding to the shape of the electrode, and the cast 110 may be configured such that the length in the horizontal direction (X direction), the length in the vertical direction (Y direction), and the length in the thickness direction (Z direction) of the interior spaces 111a,111b are each independently adjustable. Accordingly, the volume of the interior space 111a,111b can be adjusted appropriately according to the target dimensions of the electrode to be manufactured.

As shown in FIG. 3, the current collector insertion inlet 113 may be positioned in the center of the first surface 115 of the cast in which the current collector insertion inlet is formed, thereby enabling the electrode slurry 12 to be stacked on both sides of the current collector 11.

When the current collector 11 is inserted into the interior spaces 111a,111b of the cast through the current collector insertion inlet 113, the interior spaces 111a,111b may be divided into first and second interior spaces 111a,111b by the current collector 11. The electrode slurry 12 injected within the first interior space 111a may become the first electrode active material layer 12a through drying and rolling processes, and the electrode slurry 12 injected within the second interior space 111b may become the second electrode active material layer 12b through drying and rolling processes.

The electrode slurry injection inlets 112a,112b may be two or two or more corresponding to the first and second interior spaces 111a,111b. In other words, the electrode slurry injection inlets may include a first electrode slurry injection inlet 112a for injecting the electrode slurry to be stacked on one side 11a of the current collector and a second electrode slurry injection inlet 112b for injecting the electrode slurry to be stacked on the other side 11b of the current collector.

When injecting the electrode slurry 12 into the interior spaces 111a,111b, in order to prevent the current collector 11 from moving due to the flow of the electrode slurry, the cast 110 may be configured to fix the current collector 11. The cast 110 may include a current collector fixing member (not shown) to fix the current collector inserted in the interior space.

The configuration of the current collector fixing member is not particularly limited, as long as it is capable of injecting the electrode slurry 12 and preventing the electrode collector from shaking during the drying and rolling process, and specifically, it may be a gripper configured to grip both sides of the current collector. In addition, such grippers may include a first gripper mounted on a periphery of the current collector insertion inlet 113; and a second gripper mounted on the opposite surface of the first surface 115 where the current collector insertion inlet 113 is formed, wherein the first gripper grips one side of the current collector and the second gripper grips the other side of the current collector, respectively, to fix the current collector.

The cast 110 may be configured to fix the current collector 11 in a horizontal state, or it may be configured to fix the current collector 11 in an upright state, as shown in FIGS. 2 and 4. As used herein, a horizontal state means a state in which a plane of the current collector 11 is horizontal to a bottom surface of the cast 110, and an upright state means a state in which a plane of the current collector 11 is vertical to a bottom surface of the cast 110.

When the cast 110 is configured to fix the current collector 11 in an upright state, when the electrode slurry is injected, the gravity of the electrode slurry does not act on the plane of the current collector because the gravity direction (Y direction) of the electrode slurry is parallel to the plane of the current collector. In other words, when the cast 110 is configured to fix the current collector in an upright state, even if the electrode slurry is injected simultaneously on both sides of the current collector, the current collector is not damaged by the weight of the electrode slurry, and thus the productivity of electrode manufacturing can be improved.

Meanwhile, when the cast 110 is configured to fix the current collector 11 in a horizontal state, the gravity direction of the electrode slurry 12 is vertical to the plane of the current collector, and thus the weight of the electrode slurry 12 applies a force to the current collector. In order to prevent damage to the current collector 11 by the weight of the electrode slurry, when injecting the electrode slurry into the interior space of the cast, a method of sequentially injecting the electrode slurry into the first interior space and the second interior space may be considered, but in such a case, the productivity is reduced compared to the case in which the current collector is configured to be fixed in an upright state.

The heat source 120 may be configured to heat the cast 110, in order to dry the electrode slurry 12 filled in the interior of the cast. Referring to FIGS. 2 and 4, the heat source 120 may be embedded in the cast 110.

Meanwhile, the cast 110 may be in a hexahedral shape having six walls coupled to be sealed for drying and compressing the electrode slurry filled in the interior, wherein the portion in which the heat source is embedded may be the first and second pressing surfaces 116,117 for compressing the electrode slurry. When the heat source is embedded in the first and second pressing surfaces 116,117, it is preferable when drying and rolling are simultaneously performed, as the drying efficiency can be increased. However, it is not limited thereto, and the heat source 120 may be embedded in the remaining four surfaces in addition to the first and second pressing surfaces 116,117.

The heat source 120 is not limited in form or means, as long as it can heat the cast 110 surrounding the heat source, and an induction heating coil may be provided as a specific example of the heat source 120.

The heat source 120 may be temperature controlled by a temperature control part 140. Specifically, after the interior space of the cast 110 is completely filled by the electrode slurry, the temperature control part 140 may control the heat source 120 to increase in temperature to dry the electrode slurry. When the temperature of the heat source is increased, the cast is heated to increase the temperature of the electrode slurry. Further, the temperature control part 140 may control the heat source 120 to decrease the temperature of the heat source so that the cast becomes a temperature of room temperature after the drying of the electrode slurry is completed.

As the heat source 120 is increased in temperature and the electrode slurry is heated, drying occurs in which the solvent in the electrode slurry is vaporized and removed. In this case, to discharge the vaporized solvent to the outside of the cast, the cast 110 may be provided with vent holes 114a,114b.

In one embodiment, the cast 110 may comprise a first vent hole 114a for discharging the gas generated by vaporization of the solvent of the electrode slurry stacked on one side 11a of the current collector to the outside of the cast; and a second vent hole 114b for discharging the gas generated by vaporization of the solvent of the electrode slurry stacked on the other side 11b of the current collector to the outside of the cast.

The position of the first vent hole 114a and the second vent hole 114b is not particularly limited, but in order to increase the gas discharge efficiency, they are preferably disposed on the first and second pressing surfaces 116,117 for compressing the electrode slurry, among the six surfaces constituting the cast.

The cast 110 is configured to compress the electrode slurry 12 in the direction of the current collector 11, in order to roll the electrode slurry stacked on both sides of the current collector 11. Referring to FIG. 4, in order to compress the electrode slurry filled in the interior space in the direction of the current collector (in the direction of the arrow), the two surfaces constituting the cast 110 may be configured to move in the direction of the current collector. The two surfaces are opposed to each other, and the two surfaces for compressing the electrode slurry filled in the interior space of the cast are referred to herein as the first pressing surface 116 and the second pressing surface 117, respectively.

The electrode manufacturing device 100 according to the present disclosure may further comprise a driving part 130 for moving the first and second pressing surfaces 116,117 of the cast in the direction of compression. The driving part 130 may comprise a motor to provide a driving force to continuously move the first and second pressing surfaces 116,117 during drying of the electrode slurry. In addition, the driving part may move the first and second pressing surfaces 116,117 in the direction of compression but may maintain the first and second pressing surfaces 116,117 in that state after moving the first and second pressing surfaces 116,117 by a set moving distance. In addition, after the manufacturing of the electrode is completed, the driving part 130 may provide a driving force to return the first and second pressing surfaces 116,117 to their original positions.

The electrode manufacturing device 100 according to one embodiment may include a main control part 150, which may be configured to control the volume of the interior space of the cast 110, the temperature control part 140, and the driving part 130.

The electrode manufacturing device as described above, differs from a conventional electrode manufacturing equipment in that, since the electrode slurry is injected into the interior of the cast having a sealed interior space having a predetermined dimension, there is no possibility of sliding due to the flowability of the slurry, and thus an electrode of a desired dimension can be manufactured. In addition, since the electrode slurry can be compressed simultaneously with the drying of the electrode slurry, the generation of cracks can be prevented different from the conventional electrode manufacturing equipment, and since the boiling point of the solvent of the electrode slurry can be lowered, the drying temperature can be set lower than the conventional electrode manufacturing equipment.

### (second embodiment)

The present disclosure provides an electrode manufacturing method as a second embodiment.

An electrode manufacturing method according to an exemplary embodiment of the present disclosure is characterized by using the above-described electrode manufacturing device. Accordingly, it has the effect of the above-described electrode manufacturing device.

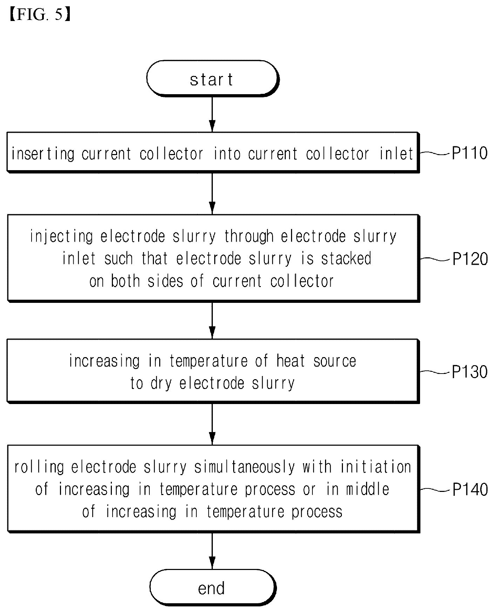

FIG. 5 is a flowchart to describe an electrode manufacturing method according to an exemplary embodiment of the present disclosure. Referring to FIG. 5, an electrode manufacturing method according to one embodiment of the present disclosure may include: a process P110 of inserting a current collector into the current collector insertion inlet; a process P120 of injecting an electrode slurry through the electrode slurry injection inlet P120 such that the electrode slurry is stacked on both sides of the current collector; a process P130 of increasing in temperature of the heat source to dry the electrode slurry; and a process P140 of rolling the electrode slurry simultaneously with the initiation of the increasing in temperature process or in the middle of the increasing in temperature process.

In the process of inserting the current collector, the current collector may be a positive electrode current collector or a negative electrode current collector.

The electrode slurry may be a positive electrode slurry or a negative electrode slurry. The electrode slurry may be prepared by mixing and stirring an electrode active material, a binder, a conductive material and a solvent.

According to one embodiment of the present disclosure, the process P120 of injecting the electrode slurry for manufacturing an ultra-high loading electrode may be a process of injecting the electrode slurry in an amount such that the loading amount of the electrode slurry to be stacked on one side of the current collector is 600 mg/25 cm² or more.

As described above, the electrode manufacturing method according to the present disclosure simultaneously performs the drying and compression processes in the state in which the interior space of the cast 110 is completely filled with the electrode slurry, and thus, the coating thickness of the electrode slurry is uniform even when the loading amount of the electrode slurry is increased to a very high level. Accordingly, there is no deviation of the drying and rolling density according to the horizontal direction position of the electrode, thereby an ultra-high loading electrode can be manufactured. Here, the loading amount of the electrode slurry of the ultra-high loading electrode may be 600 mg/25 cm² or more, more particularly 700 mg/25 cm² or more, more particularly 750 mg/25 cm² to 1500 mg/25 cm², more particularly 800 mg/25 cm² to 1200 mg/25 cm², based on the loading amount of the electrode slurry stacked on one side of the current collector.

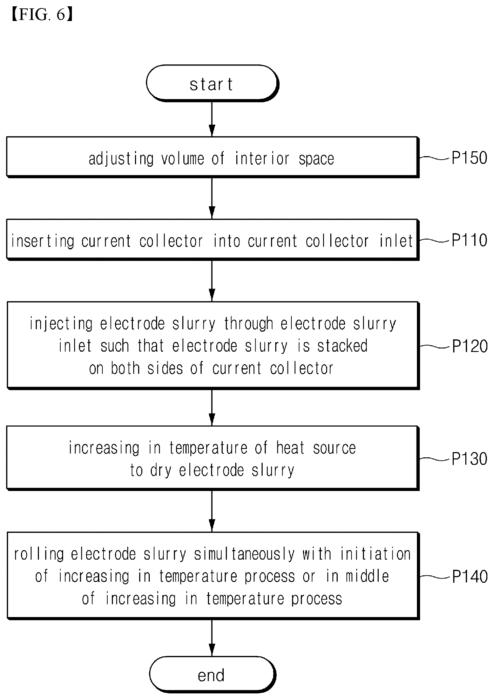

FIG. 6 is a flowchart to describe an electrode manufacturing method according to an exemplary embodiment of the present disclosure. Referring to FIG. 6, the electrode manufacturing method according to one embodiment may further comprise, prior to the process of inserting the current collector, a process P150 of adjusting the volume of the interior space of the cast so that the volume of the interior space is appropriate for the dimensions of the electrode to be manufactured.

The process P150 of adjusting the volume of the interior space may comprise a process of adjusting a horizontal direction length, a vertical direction length and a thickness direction length of the interior space of the cast to correspond to a horizontal direction length, a vertical direction length and a thickness direction length of the electrode to be manufactured, respectively.

The process P130 of increasing in temperature of the heat source is initiated in a state in which the interior space is completely filled by the electrode slurry. This is because if the heat source is increased in temperature in a state in which the interior space is not completely filled by the electrode slurry, the electrode cannot be manufactured in the desired dimensions.

As described above, the present disclosure has been described in more detail with reference to the accompanying drawings and the embodiments. Therefore, the configurations described herein or shown in the drawings are merely one embodiment of the present disclosure and do not represent all the technical spirit of the present disclosure such that it should be understood that there may be various equivalents and modifications capable of substituting the embodiments and the configurations at the time of filing the present application.

## Claims

1. An electrode manufacturing device, comprising:
a box-shaped cast having an interior space for accommodating an electrode slurry and a current collector; an electrode slurry injection inlet for injecting the electrode slurry into the interior space; and a current collector insertion inlet for inserting the current collector into the interior space; and
a heat source configured to heat the cast, in order to dry the electrode slurry filled in the interior space of the cast,
wherein the current collector insertion inlet is located at a center of a first surface of the cast in which the current collector insertion inlet is formed, in order to stack the electrode slurry on both sides of the current collector,
wherein the cast is configured to compress the electrode slurry in a direction of the current collector, in order to roll the electrode slurry stacked on both sides of the current collector.

2. The electrode manufacturing device of claim 1, wherein the cast further comprises: a first vent hole for discharging gas generated by vaporization of a solvent of an electrode slurry stacked on one side of the current collector to an outside of the cast; and a second vent hole for discharging gas generated by vaporization of a solvent of an electrode slurry stacked on the other side of the current collector to the outside of the cast.

3. The electrode manufacturing device of claim 1, wherein the cast is configured to independently adjust a length in a horizontal direction, a length in a vertical direction, and a length in a thickness direction of the interior space, respectively.

4. The electrode manufacturing device of claim 1, wherein the cast is configured to fix the current collector.

5. The electrode manufacturing device of claim 1, wherein the cast is configured to fix the current collector in an upright state.

6. The electrode manufacturing device of claim 1, wherein the interior space of the cast is divided into a first interior space and a second interior space by the inserting of the current collector.

7. The electrode manufacturing device of claim 1, wherein the electrode manufacturing device further comprises a driving part for moving a first pressing surface and a second pressing surface of the cast for compressing the electrode slurry stacked on both sides of the current collector, in the direction of compression.

8. The electrode manufacturing device of claim 1, wherein the heat source is embedded in the cast.

9. The electrode manufacturing device of claim 1, wherein the heat source is embedded in the first pressing surface of the cast and second pressing surface of the cast for rolling the electrode slurry stacked on both sides of the current collector.

10. The electrode manufacturing device of claim 1, wherein the electrode slurry injection inlet comprise a first electrode slurry injection inlet for injecting electrode slurry to be stacked on one side of the current collector and a second electrode slurry injection inlet for injecting electrode slurry to be stacked on the other side of the current collector.

11. An electrode manufacturing method using the electrode manufacturing device according to any one of Claims 1 to 10.

12. The electrode manufacturing method of claim 11, comprising:
inserting the current collector into the current collector insertion inlet;
injecting the electrode slurry through the electrode slurry injection inlet such that the electrode slurry is stacked on both sides of the current collector;
increasing a temperature of the heat source to dry the electrode slurry; and
rolling the electrode slurry simultaneously with initiation of increasing the temperature of the heat source or in a middle of the increasing the temperature of the heat source.

13. The electrode manufacturing method of claim 12, further comprising, prior to inserting the current collector,
adjusting a volume of the interior space of the cast so that the volume of the interior space of the cast is appropriate for dimensions of the electrode to be manufactured.

14. The electrode manufacturing method of claim 12, wherein injecting the electrode slurry, the electrode slurry is injected in an amount such that a loading amount of electrode slurry to be stacked on an one side of the current collector is 600 mg/25 cm² or more.

15. The electrode manufacturing method of claim 12, wherein increasing the temperature of the heat source is initiated in a state in which the interior space is completely filled by the electrode slurry.
